# EUROPEAN PATENT APPLICATION

(11) **EP 4 425 411 A1**
(43) Date of publication of application: **04.09.2024**
(21) Application number: 22885676.1
(22) Date of filing: 12.10.2022
(51) Int. Cl.: G06Q 20/36, G06Q 20/06, G06F 8/65

(54) **METHOD FOR UPDATING DIGITAL CURRENCY WALLET, AND TERMINAL AND SYSTEM**

(30) Priority: 27.10.2021 CN 202111254635
(71) Applicant: DIGITAL CURRENCY INSTITUTE, THE PEOPLE'S BANK OF CHINA, Beijing 100071 (CN)
(72) Inventor: MU, Changchun, Beijing 100071 (CN); DI, Gang, Beijing 100071 (CN); ZHANG, Hongxue, Beijing 100071 (CN); ZHAO, Xinyu, Beijing 100071 (CN); CUI, Peidong, Beijing 100071 (CN)
(74) Representative: Winter, Brandl - Partnerschaft mbB
(86) International application number: PCT/CN2022/124868
(87) International publication number: WO 2023/071797

(57) **Abstract**

The provided are a method, terminal, and system for updating a digital currency wallet, and relates to the field of computer technology. A specific implementation of the method includes: sending, based on user trigger, a query request about whether the digital currency wallet needs to be updated to a trusted platform; receiving a query result returned by the trusted platform; in the case that the query result indicates that the digital currency wallet needs to be updated, withdrawing a digital currency from the digital currency wallet, synchronizing offline transaction data of the digital currency wallet, and sending an update request to the trusted platform; receiving a target update instruction sent by the trusted platform, wherein the target update instruction indicates account data corresponding to the digital currency wallet; and updating the digital currency wallet based on the account data indicated by the target update instruction. This implementation avoids losses of the digital currency during the update process, and the account data of the updated digital currency wallet remains unchanged, thereby improving user experience.

## Description

### Cross-Reference to Related Application

The present application claims the priority of Chinese patent application No. 202111254635.0, entitled "Method, Terminal, and System for Updating Digital Currency Wallet", filed on October 27, 2021,the entire content of which is incorporated herein by reference as part or all of the present application.

### Technical Field

The present disclosure relates to the field of computer technology, and in particular to a method, terminal, and system for updating a digital currency wallet.

### Background

As the business needs of digital currency wallets change or wallet functions are upgraded, it is necessary to perform update and upgrade operations on digital currency wallet applications.

Currently, when the digital currency wallet is updated and upgraded, a method for canceling the opened digital currency wallet and reapplying for a new digital currency wallet is adopted to achieve the update and upgrade of the digital currency wallet.

In the process of implementing the present application, the inventor found that there are at least following problems in the prior art:
when the opened digital currency wallet is cancelled, the corresponding account of the digital currency wallet is logout as well, and as a result, after reapplying for opening a new digital currency wallet, data such as historical transaction records of the account cannot be queried, thereby reducing user experience.

### Summary

In view of this, embodiments of the present disclosure provide a method, terminal, and system for updating a digital currency wallet.

According to an aspect of an embodiment of the present disclosure, a method for updating a digital currency wallet is provided.

The method for updating a digital currency wallet according to this embodiment of the present disclosure, when applied to a terminal with a digital currency wallet, includes: sending a query request about whether the digital currency wallet needs to be updated to a trusted platform based on user trigger;
Receiving a query result returned by the trusted platform based on the query request;
in a case that the query result indicates that the digital currency wallet needs to be updated, withdrawning a digital currency from the digital currency wallet, synchronizing offline transaction data of the digital currency wallet, and sending an update request to the trusted platform;
receiving a target update instruction sent by the trusted platform based on the update request, wherein the target update instruction indicates account data corresponding to the digital currency wallet; and
updating the digital currency wallet based on the account data indicated by the target update instruction.

According to one or more embodiments of the present disclosure, after the sending an update request to the trusted platform and before the receiving a target update instruction sent by the trusted platform based on the update request, the method further includes:
receiving an initialization instruction of updating sent by the trusted platform, wherein the initialization instruction of updating indicates a status of the digital currency wallet;
determining whether there is a digital currency balance in the digital currency wallet based on the initialization instruction of updating; and
if not, setting a current status of the digital currency wallet based on the status indicated by the initialization instruction of updating, and returning a first status code is returned to the trusted platform, such that the trusted platform sends the target update instruction based on the first status code.

According to one or more embodiments of the present disclosure, the status indicated by the initialization instruction of updating is an updating status; and after the setting a current status of the digital currency wallet to the status indicated by the initialization instruction of updating, the method further includes:
restricting offline transaction operations of the digital currency wallet.

According to one or more embodiments of the present disclosure, in a case that there is a digital currency balance in the digital currency wallet, the method further includes:
Returning a second status code to the trusted platform, such that the trusted platform terminates a response to the update request based on the second status code.

According to one or more embodiments of the present disclosure, after the updating the digital currency wallet based on the account data indicated by the target update instruction, the method further includes:
setting the current status of the digital currency wallet is set to an available status.

According to one or more embodiments of the present disclosure, the target update instruction includes a deletion instruction and an installation instruction; and the updating the digital currency wallet based on the account data indicated by the target update instruction includes:
the digital currency wallet is deleted based on the deletion instruction, and based on an installation package indicated by the installation instruction, downloading and installing a new digital currency wallet corresponding to the installation package; and
opening the new digital currency wallet based on the account data.

According to one or more embodiments of the present disclosure, after the downloading and installing a new digital currency wallet corresponding to the installation package, the method further includes:
sending certificate application data to the trusted platform, such that the trusted platform obtains, based on the certificate application data, the account data from a management platform corresponding to the digital currency wallet, and generates the target update instruction based on the account data.

According to another aspect of an embodiment of the present disclosure, a terminal for updating a digital currency wallet is provided.

The terminal for updating a digital currency wallet according to this embodiment of the present disclosure includes: a query interaction module, a processing module, and an update module.

The query interaction module is configured to send, based on user trigger, a query request about whether the digital currency wallet needs to be updated to a trusted platform, and receive a query result returned by the trusted platform based on the query request.

The processing module is configured to withdraw a digital currency from the digital currency wallet in a case that the query result indicates that the digital currency wallet needs to be updated, synchronize offline transaction data of the digital currency wallet, and send an update request to the trusted platform.

The update module is configured to receive a target update instruction sent by the trusted platform based on the update request, where the target update instruction indicates account data corresponding to the digital currency wallet; and update the digital currency wallet based on the account data indicated by the target update instruction.

According to another aspect of an embodiment of the present disclosure, a system for updating a digital currency wallet is provided.

The system for updating a digital currency wallet according to this embodiment of the present disclosure includes: a trusted platform, a management platform corresponding to the digital currency wallet, and the terminal for updating a digital currency wallet provided in the second aspect.

The trusted platform is configured to determine whether the digital currency wallet needs to be updated based on a query request sent by the terminal about whether the digital currency wallet needs to be updated, and configuration information corresponding to the digital currency wallet, and return a query result to the terminal; and obtain account data from the management platform corresponding to the digital currency wallet after receiving an update request sent by the terminal, and send a target update instruction to the terminal based on the account data.

In order to achieve the above objectives, according to another aspect of an embodiment of the present disclosure, an electronic device for updating a digital currency wallet is provided.

The electronic device for updating a digital currency wallet according to this embodiment of the present disclosure includes: one or more processors; and a storage apparatus, configured to store one or more programs. The one or more programs, when executed by the one or more processors, enable the one or more processors to implement the method for updating a digital currency wallet according to this embodiment of the present disclosure.

In order to achieve the above objectives, according to another aspect of this embodiment of the present disclosure, a computer-readable storage medium is provided.

The computer-readable storage medium according to this embodiment of the present disclosure stores a computer program. The program, when executed by a processor, implements the method for updating a digital currency wallet according to this embodiment of the present disclosure.

Further effects of the foregoing non-conventional optional methods will be described below in conjunction with specific implementations.

### Brief Description of the Drawings

The accompanying drawings are used for a better understanding of the present disclosure, which do not constitute improper limitations on the present disclosure.
Fig. 1 is a schematic diagram of main steps of a method for updating a digital currency wallet according to an embodiment of the present disclosure;
Fig. 2 is a schematic diagram of main modules of a terminal for updating a digital currency wallet according to an embodiment of the present disclosure;
Fig. 3 is a schematic diagram of main modules of a system for updating a digital currency wallet according to an embodiment of the present disclosure;
Fig. 4 is a schematic diagram of main steps of another method for updating a digital currency wallet according to an embodiment of the present disclosure;
Fig. 5 is a diagram of an exemplary system architecture to which an embodiment of the present disclosure can be applied; and
Fig. 6 is a structural schematic diagram of a computer system suitable for implementing a terminal device or server according to an embodiment of the present disclosure.

### Detailed Description of the Embodiments

Exemplary embodiments of the present disclosure are described in conjunction with the accompanying drawings below, which include various details of the embodiments of the present disclosure to facilitate understanding, and should be considered as exemplary only. Therefore, those of ordinary skill in the art should realize that the embodiments described herein can be variously transformed and modified without departing from the scope and spirit of the present disclosure. Similarly, for clarity and brevity, descriptions of well-known functions and structures are omitted in the following descriptions.

It should be noted that the embodiments of the present disclosure and technical features in the embodiments can be mutually combined without conflicts.

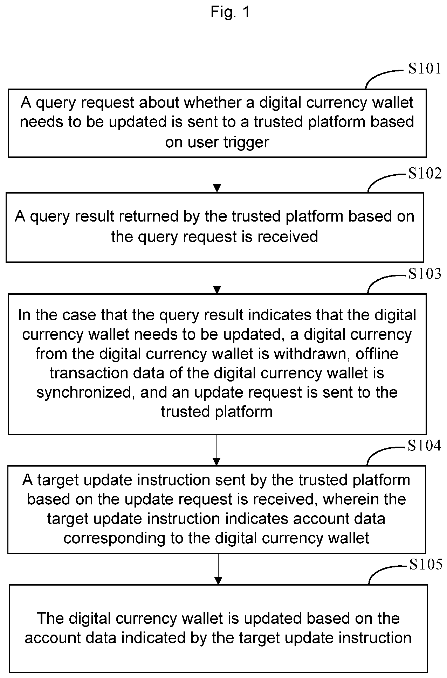

Fig. 1 is a schematic diagram of main steps of a method for updating a digital currency wallet according to an embodiment of the present disclosure.

As shown in Fig. 1, the method for updating a digital currency wallet according to this embodiment of the present disclosure, when applied to a terminal with a digital currency wallet, mainly includes the following steps:
Step S101: A query request about whether the digital currency wallet needs to be updated is sent to a trusted platform based on user trigger.

In this embodiment of the present disclosure, in order to ensure the security of digital currency transactions, the digital currency wallet is a hardware wallet typically installed in a security chip, such as a hardware wallet installed on different security chips such as a mobile phone Secure Element (SE), a Subscriber Identity Module (SIM) card, or an Integrated Circuit chip (IC) card. It should be understood that the digital currency wallet or hardware wallet described in this embodiment of the present disclosure is an application on the security chip, that is, the digital currency wallet is actually a digital currency wallet application, and the hardware wallet is a hardware wallet application.

It should be understood that before executing the method for updating a digital currency wallet provided by this embodiment of the present disclosure, the security chip successfully performs the operations of applying for, downloading, installing, personalizing, and opening the hardware wallet through a card writing device, and is in a normal transaction status. Installation packages for different versions of hardware wallet are uploaded to the trusted platform. When there is a new version of hardware wallet, the trusted platform may also acquire the new version of hardware wallet. In addition, as a management system for the life cycle of the hardware wallet, the trusted platform has the capability of performing application management based on multiple dimensions such as channels, manufacturers, and version numbers. The channels refer to payment channels corresponding to different payment application sources.

When an end user has access to a hardware wallet operation page through a wallet app on the terminal, a trigger for the hardware wallet is initiated. In this case, the terminal sends, through the wallet app, a query request about whether the hardware wallet on the security chip of the terminal needs to be updated to the trusted platform. It should be noted that the wallet app is an application that runs on the terminal, whereas the hardware wallet (digital currency wallet) is a program that runs on the security chip.

Step S102: A query result returned by the trusted platform based on the query request is received.

After receiving the query request sent by the terminal about whether the digital currency wallet needs to be updated, the trusted platform determines whether the digital currency wallet needs to be updated based on configuration information corresponding to the digital currency wallet. For example, the trusted platform determines whether the digital currency wallet needs to be updated after synthetic judgment based on information such as the version number, channel, and manufacturer of the digital currency wallet. Further, when it is determined that the digital currency wallet is modified, the trusted platform may also determine whether the digital currency wallet requires a mandatory update based on the modification content of the digital currency wallet. For example, when the digital currency wallet upgrades a serious security vulnerability, it is determined that the digital currency wallet requires the mandatory update. If the digital currency wallet merely upgrades the content that does not affect functional usage but may have a minimal impact on user experience (e.g., merely updating a display color layout of an interface) of the digital currency wallet, it may be determined that the update for the digital currency wallet is non-mandatory.

After determining whether the digital currency needs to be updated and whether the mandatory update is needed, the trusted platform returns the query result corresponding to the query request to the terminal, such that the terminal may determine whether an update request is initiated based on the query request. Step S103: In the case that the query result indicates that the digital currency wallet needs to be updated, the digital currency is withdrawn from the digital currency wallet, offline transaction data of the digital currency wallet is synchronized, and an update request is sent to the trusted platform.

In an embodiment of the present disclosure, after the terminal receives the query result returned by the trusted platform, the wallet app on the terminal may determine whether to send an update request to the trusted platform based on the query result. If the wallet app determines that the query result indicates that the digital currency wallet needs to be updated and requires a mandatory update, the wallet app on the terminal sends an update request to the trusted platform. Alternatively, if the query result indicates that an update is required but is not mandatory, the wallet app on the terminal may determine whether to initiate an update request based on business needs or user judgment. For example, the wallet app displays an update prompt for the digital currency wallet to the user through a terminal touchscreen. If the user rejects the update, the terminal does not initiate an update request to the trusted platform, and the update process for the digital currency wallet maybe terminated. For another example, if the query result indicates that the digital currency does not need to be updated, the wallet app does not initiate an update request to the trusted platform, and the update process for the digital currency wallet is terminated.

After the wallet app determines that an update request needs to be initiated to the trusted platform, before the wallet app sends the update request to the trusted platform, as the original digital currency wallet on the terminal needs to be deleted during the update process of the digital currency wallet. In order to avoid losses of the digital currency, the terminal first withdraws the digital currency from the digital currency wallet and synchronizes the offline transaction data of the digital currency wallet. As at least one alternative embodiment, the terminal may guide the user to perform a withdrawal operation by displaying withdrawal guidance information, and synchronize the offline transaction data in the digital currency wallet to a management platform corresponding to the digital currency wallet, such that the management platform correspondingly records an account (e.g., wallet ID), association code, and account data (transaction data, certificates, etc.) of the digital currency wallet.

The association code is mainly used for a secret communication between the management platform of the digital currency wallet and the trusted platform. The association code is in one-to-one correspondence with the account. When the management platform communicates with the trusted platform, the association code is used as an identifier of the digital currency wallet to prevent the account of the digital currency wallet from being directly sent, thereby avoiding transaction risks caused by the theft of the account of the digital currency wallet. In addition, after the terminal synchronizes the offline transaction data to the corresponding management platform, account data recorded by the management platform is complete transaction data including online transaction data and offline transaction data. Later, the digital currency wallet is updated based on the account data which is the complete transaction data, thereby improving account security and usability, and enhancing user experience.

Step S104: A target update instruction sent by the trusted platform based on the update request is received, and the target update instruction indicates the account data corresponding to the digital currency wallet.

The terminal may send the update request to the trusted platform after completing the operations of withdrawal and offline data synchronization. After receiving the update request, the trusted platform records update application information corresponding to the digital currency wallet, sets a status of the digital currency wallet in the trusted platform to "updating", and then organizes and issues an initialization instruction of updating.

After receiving the initialization instruction of updating sent by the trusted platform, the terminal correspondingly sets a current status of the digital currency wallet. For example, in an implementation of the present disclosure, the terminal receives the initialization instruction of updating sent by the trusted platform, and the initialization instruction of updating indicates the status of the digital currency wallet; based on the initialization instruction of updating, whether there is a digital currency balance in the digital currency wallet is determined; and if not, the current status of the digital currency wallet is set based on the status indicated by the initialization instruction of updating, and a first status code is returned to the trusted platform, such that the trusted platform sends the target update instruction based on the first status code.

In this implementation, the wallet app on the terminal receives the initialization instruction of updating issued by the trusted platform, and the initialization instruction of updating indicates the status of the digital currency wallet being "updating". The wallet app sends the initialization instruction of updating to the digital currency wallet on the security chip, and the digital currency wallet determines whether there is other unsynchronized information such as the digital currency balance. If there is the information such as the digital currency balance, a second status code representing an error is returned to the wallet app, and the wallet app sends the second status code to the trusted platform. If there is no information such as the digital currency balance, the first status code representing normalcy is returned to the wallet app, and the wallet app sends the first status code to the trusted platform, such that the trusted platform organizes the target update instruction based on the first status code representing normalcy. Moreover, in the absence of information such as the digital currency balance, the digital currency wallet also sets the current status to "pending update" based on the status (updating) in the initialization instruction of updating, and restricts offline transaction operations to avoid data losses due to other operations (e.g., transaction operations) during the update process, thereby improving the security of the update process.

After the terminal sends the first status code representing normalcy to the trusted platform, the trusted platform may notify the digital currency wallet corresponding to the management platform to be updated based on a personalization data request message, and obtain personalization data required for the update from the management platform corresponding to the digital currency wallet, i.e., the account data such as wallet ID, keys for message encryption, keys for calculating MAC, keys for transaction authentication, and association codes. After obtaining the personalization data required for the update from the management platform side, the trusted platform organizes the target update instruction (including a deletion instruction, a download instruction, an installation instruction, a personalization instruction, etc.) based on the type of the digital currency wallet (hardware wallet application installed on different security chips such as a mobile phone SE, a SIM card, and an IC card), and issues the target update instruction to the terminal.

Certainly, if the wallet app sends the second status code to the trusted platform, the trusted platform may terminate, based on the second status code representing an error, the response to the update request sent by the terminal, delete the update application information and a status value corresponding to the digital currency wallet of the terminal, and further return an error code to the terminal, and the wallet app on the terminal prompts the user that the update cannot be performed.

Step S105: The digital currency wallet is updated based on the account data indicated by the target update instruction.

In an embodiment of the present disclosure, the target update instruction includes the deletion instruction and the installation instruction. The terminal may delete the digital currency wallet based on the deletion instruction, based on an installation package indicated by the installation instruction, download and install a new digital currency wallet corresponding to the installation package, and then open the new digital currency wallet based on the account data.

As mentioned above, the target update instruction may include the deletion instruction, the download instruction, the installation instruction, and the personalization instruction. The trusted platform may issue these instructions in batch, which are forwarded by the wallet app on the terminal to the digital currency wallet on the security chip. The digital currency wallet deletes the original digital currency wallet based on the deletion instruction, downloads an installation package of a new version of digital currency wallet based on the download instruction, then installs the new version of digital currency wallet based on the installation instruction, and further opens the new digital currency wallet based on the personalization data (account data) corresponding to the digital currency wallet included in the personalization instruction.

After the security chip successfully executes all of the deletion instruction, the download instruction, the installation instruction, and the personalization instruction, the wallet app may send wallet certificate application data to the trusted platform so as to apply for a certificate and other account data corresponding to the new digital currency wallet, such as a nickname and a historical transaction record. After the trusted platform obtains, based on the successful execution feedback, the wallet certificate application data from the terminal, the trusted platform notifies the management platform corresponding to the digital currency wallet to perform an update and opening operation, obtains updated opening response data (including a hardware wallet opening instruction, a certificate, a nickname, and a historical transaction record), and sends the opening response data to the digital currency wallet on the security chip in the terminal. After the digital currency wallet successfully executes the opening operation based on the opening response data, an opening execution result is returned to the trusted platform, the trusted platform forwards the opening execution result as an opening completion notification to the management platform, and the management platform sets the current status of the updated digital currency wallet to "available" based on the opening completion notification, and returns an opening completion response to the trusted platform. Then, the updated digital currency wallet is in a normal transaction status.

It should be noted that if an update failure occurs during the update process, the terminal may prompt the user to initiate an update request again. After receiving the update request, the trusted platform may continue to complete the update operation based on the update application information recorded when the terminal initiates the update request for the first time.

The method for updating a digital currency wallet according to this embodiment of the present disclosure can reveal that the terminal with the digital currency wallet may query the trusted platform about whether the digital currency wallet needs to be updated. In the case that the update is needed, the digital currency wallet is updated based on the account data in the target update instruction sent by the trusted platform, such that the account data corresponding to the updated digital currency wallet remains unchanged, and query of the data such as the historical transaction record can still be achieved, thereby improving user experience. Further, in the case that the update is needed, the terminal with the digital currency wallet first withdraws the digital currency from the digital currency wallet and synchronizes the offline transaction data of the digital currency wallet, which firstly can avoid losses of the digital currency during the update process, and secondly can ensure that the account data in the target update instruction is complete data including the offline transaction data, thereby improving account security and usability.

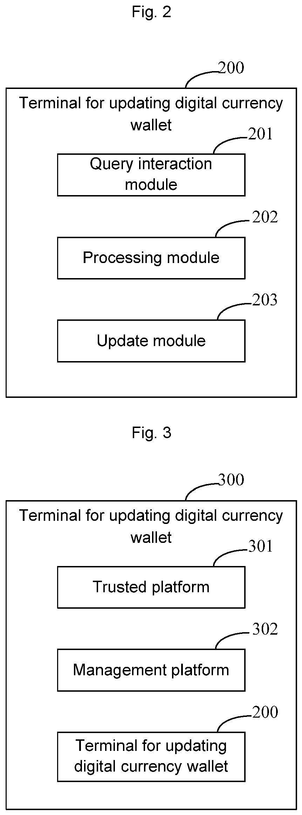

Fig. 2 is a schematic diagram of main modules of a terminal for updating a digital currency wallet according to an embodiment of the present disclosure. As shown in Fig. 2, a terminal 200 for updating a digital currency wallet according to an embodiment of the present disclosure includes: a query interaction module 201, a processing module 202, and an update module 203.

The query interaction module 201 is configured to send, based on user trigger, a query request about whether the digital currency wallet needs to be updated to a trusted platform, and receive a query result returned by the trusted platform based on the query request.

The processing module 202 is configured to withdraw the digital currency from the digital currency wallet in the case that the query result indicates that the digital currency wallet needs to be updated, synchronize offline transaction data of the digital currency wallet, and send an update request to the trusted platform.

The update module 203 is configured to receive a target update instruction sent by the trusted platform based on the update request, where the target update instruction indicates account data corresponding to the digital currency wallet; and update the digital currency wallet based on the account data indicated by the target update instruction.

According to an embodiment of the present disclosure, the update module 203 is further configured to receive an initialization instruction of updating sent by the trusted platform, where the initialization instruction of updating indicates a status of the digital currency wallet; determine, based on the initialization instruction of updating, whether there is a digital currency balance in the digital currency wallet; and if not, set a current status of the digital currency wallet based on a status indicated by the initialization instruction of updating, and return a first status code to the trusted platform so as to enable the trusted platform to send the target update instruction based on the first status code.

According to an embodiment of the present disclosure, the status indicated by the initialization instruction of updating is an updating status; and the update module 203 is further configured to restrict offline transaction operations of the digital currency wallet.

According to an embodiment of the present disclosure, the update module 203 is further configured to return a second status code to the trusted platform in the case that there is a digital currency balance in the digital currency wallet so as to enable the trusted platform to terminate a response to the update request based on the second status code.

According to an embodiment of the present disclosure, the update module 203 is further configured to set the current status of the digital currency wallet to an available status after updating the digital currency wallet based on the account data indicated by the target update instruction.

According to an embodiment of the present disclosure, the target update instruction includes a deletion instruction and an installation instruction. The update module 203 is configured to delete the digital currency wallet based on the deletion instruction, based on an installation package indicated by the installation instruction, download and install a new digital currency wallet corresponding to the installation package, and then open the new digital currency wallet based on the account data.

According to an embodiment of the present disclosure, the update module 203 is configured to send certificate application data to the trusted platform, such that the trusted platform obtains, based on the certificate application data, the account data from a management platform corresponding to the digital currency wallet, and generates the target update instruction based on the account data.

The terminal for updating a digital currency wallet according to this embodiment of the present disclosure can reveal that the terminal with the digital currency wallet can query the trusted platform about whether the digital currency wallet needs to be updated. In the case that the update is needed, the digital currency wallet is updated based on the account data in the target update instruction sent by the trusted platform, such that the account data corresponding to the updated digital currency wallet remains unchanged, and query of the data such as a historical transaction record can still be achieved, thereby improving user experience. Further, in the case that the update is needed, the terminal with the digital currency wallet first withdraws the digital currency from the digital currency wallet and synchronizes the offline transaction data of the digital currency wallet, which firstly can avoid losses of the digital currency during the update process, and secondly can ensure that the account data in the target update instruction is complete data including the offline transaction data, thereby improving account security and usability.

Fig. 3 is a schematic diagram of main modules of a system for updating a digital currency wallet according to an embodiment of the present disclosure. As shown in Fig. 3, a system 300 for updating a digital currency wallet according to an embodiment of the present disclosure includes: a trusted platform 301, a management platform 302 corresponding to the digital currency wallet, and the terminal 200 for updating a digital currency wallet provided by any one of the above embodiments.

The trusted platform 301 is configured to determine whether the digital currency wallet needs to be updated based on a query request sent by the terminal 200 about whether the digital currency wallet needs to be updated, and configuration information corresponding to the digital currency wallet, and return a query result to the terminal 200; and obtain account data corresponding to the digital currency wallet from the management platform 302 corresponding to the digital currency wallet after receiving an update request sent by the terminal, and send a target update instruction to the terminal 200 based on the account data.

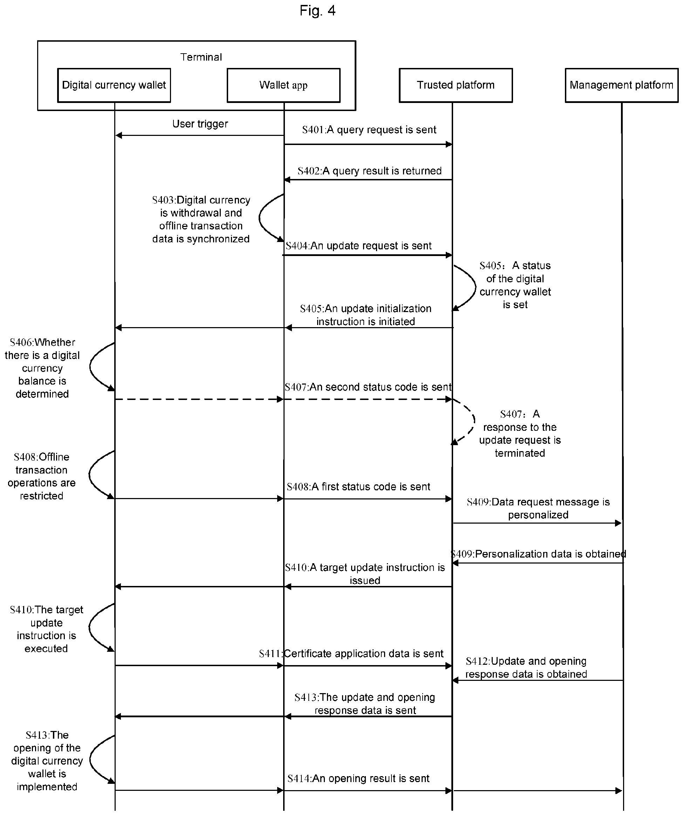

The method for updating a digital currency wallet provided by this embodiment of the present disclosure is further described in conjunction with an architecture of a system for updating a digital currency wallet below. The terminal includes a wallet app and a digital currency wallet application. The wallet app is an application that runs on the terminal, and the digital currency wallet is a program that runs on a security chip. The wallet app on the terminal is configured to communicate with the trusted platform, and the digital currency wallet that runs on the security chip does not directly communicate with the trusted platform to ensure security. As shown in Fig. 4, the method may include the following steps:
Step S401: The terminal sends, based on user trigger, a query request about whether the digital currency wallet needs to be updated to the trusted platform.

When an end user has access to a hardware wallet operation page through the wallet app on the terminal, a trigger for a hardware wallet is initiated. In this case, the terminal sends, through the wallet app, the query request about whether the hardware wallet on the security chip of the terminal needs to be updated to the trusted platform.

Step S402: The trusted platform determines, based on configuration information corresponding to the digital currency wallet, whether the digital currency wallet needs to be updated, and returns a corresponding query result to the terminal.

Step S403: When the wallet app determines that the query result indicates that the digital currency wallet needs to be updated, the user is guided to withdraw a digital currency from the digital currency wallet, and synchronize offline transaction data of the digital currency wallet.

In this step, if the query result indicates that the digital currency wallet does not need to be updated, the update process for the digital currency wallet maybe ended. In this case, the user maybe guided to withdraw the digital currency and synchronize the offline transaction data, or the existing working status of the digital currency wallet may be maintained, that is, the user is not guided to perform digital currency withdrawals and synchronization of the offline transaction data.

Step S404: That the wallet app have completed sending an update request to the trusted platform.

Step S405: The trusted platform sets a status of the digital currency wallet, and issues an initialization instruction of updating to the wallet app based on the status of the digital currency wallet, and the wallet app sends the initialization instruction of updating to the digital currency wallet.

Step S406: The digital currency wallet determines, based on the initialization instruction of updating, whether there is a digital currency balance in the digital currency wallet, if yes, step S407 is performed, and if not, step S408 is performed.

Step S407: The wallet app sends a second status code to the trusted platform, such that the trusted platform terminates a response to the update request based on the second status code.

The second status code represents that the digital currency wallet is in an error status and cannot be updated. The trusted platform may terminate the response to the update request based on the second status code, and therefore the update process for the digital currency wallet maybe ended. In this case, the trusted platform may return an error code to the wallet app, and the wallet app prompts the user not to perform the update. The user may also initiate an update request again based on the prompt, and the trusted platform may continue to complete the update operation based on the update application information from the initially initiated update request.

Step S408: Offline transaction operations of the digital currency are restricted, the wallet app sends a first status code to the trusted platform, and step S409 is performed.

The first status code represents that the digital currency wallet is in a normal status and maybe updated. After the digital currency wallet determines that there is no unsynchronized data such as a digital currency balance, the current status (pending update) of the digital currency wallet mayset based on the status (updating) in the initialization instruction of updating so as to restrict the offline transaction operations of the digital currency wallet.

Step S409: The trusted platform sends a personalization data request message to a management platform corresponding to the digital currency wallet so as to notify the management platform that the digital currency wallet needs to be updated, and obtains personalization data corresponding to the digital currency wallet from the management platform.

It should be understood that the personalization data is a portion of account data corresponding to the digital currency wallet, which may include an account ID, a secret key, an association code, etc.

Step S410: The trusted platform issues a target update instruction to the wallet app, and the wallet app forwards the target update instruction to a security chip where the digital currency wallet is located, such that the security chip executes the target update instruction.

The target update instruction includes a deletion instruction, a download instruction, an installation instruction, and personalization instruction stream. The trusted platform may issue these instructions in batch, such that the security chip executes these instructions so as to delete an original digital currency wallet application, and download and install a new digital currency wallet application.

Step S411: The digital currency wallet sends certificate application data to the trusted platform through the wallet app.

Step S412: The trusted platform notifies, based on the certificate application data, the management platform to perform an update and opening operation, and obtains update and opening response data.

The update and opening response data includes a wallet opening instruction. The update and opening response data is also a portion of account data corresponding to the digital currency wallet, which may include a certificate, a nickname, a historical transaction record, etc. corresponding to the digital currency wallet. It should be understood that the wallet opening instruction also belongs to the target update instruction. Through the wallet opening instruction, and the account data such as the certificate, the nickname, and the historical transaction record, the opening of a new version of digital currency wallet is achieved, and the newly opened digital currency wallet is in an available status.

Step S413: The trusted platform sends the update and opening response data to the wallet app, and the wallet app forwards the opening response data to the digital currency wallet, such that the digital currency wallet completes an opening process based on the opening response data.

Step S414: The digital currency wallet returns an opening result to the trusted platform through the wallet app, and the trusted platform forwards the opening result to the management platform.

After the opening is completed, the new version of digital currency wallet is in an available status. Because the new version of digital currency wallet is updated based on the old version of account data, the wallet ID, the nickname, the historical transaction record, etc. of the updated digital currency wallet are unchanged, allowing the historical transaction record to be queried.

The system for updating a digital currency wallet according to this embodiment of the present disclosure can reveal that the terminal with the digital currency wallet can query the trusted platform about whether the digital currency wallet needs to be updated. In the case that the update is needed, the digital currency wallet is updated based on the account data in the target update instruction sent by the trusted platform, such that the account data corresponding to the updated digital currency wallet remains unchanged, and query of the data such as the historical transaction record can still be achieved, thereby improving user experience. Further, in the case that the update is needed, the terminal with the digital currency wallet first withdraws the digital currency from the digital currency wallet and synchronizes the offline transaction data of the digital currency wallet, which firstly can avoid losses of the digital currency during the update process, and secondly can ensure that the account data in the target update instruction is complete data including the offline transaction data, thereby improving account security and usability.

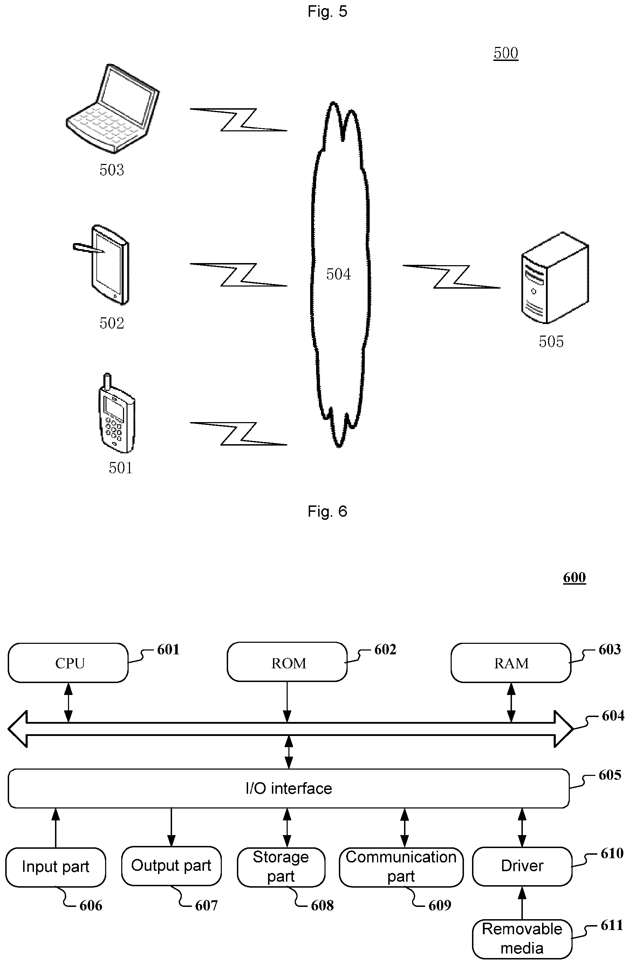

Fig. 5 illustrates an exemplary system architecture 500 that can apply a method for updating a digital currency wallet or a system for updating a digital currency wallet according to an embodiment of the present disclosure.

As shown in Fig. 5, the system architecture 500 may include terminal devices 501, 502, and 503, a network 504, and a server 505. The network 504 is a medium configured to provide a communication link between the terminal devices 501, 502, and 503 and the server 505. The network 504 may have various connection types, such as wired and wireless communication links, or fiber optic cables.

The user may use the terminal devices 501, 502, and 503 to interact with the server 505 through the network 504 to receive or send messages, etc. The terminal devices 501, 502, and 503 may be provided with various communication client applications, such as wallet applications for electronic payments, shopping applications, web browser applications, search applications, instant messaging tools, email clients, and social platform software.

The terminal devices 501, 502 and 503 may be various electronic devices having display screens and supporting web browsing, including but not limited to a smart phone, a tablet personal computer, a portable laptop, a desk computer, etc.

The server 505 may be a server that provides various services, such as a backend management server that supports payment requests sent by users through the terminal devices 501, 502, and 503. The backend management server can perform analysis and other processing on received data such as a product information query request and feed a processing result (e.g., an opening result) back to the terminal devices.

It should be understood that the number of the terminal devices, networks and servers in Fig. 5 is for an illustrative purpose only. According to implementation needs, there may be any number of terminal devices, networks and servers.

Referring to Fig. 6 below, Fig. 6 illustrates a structural schematic diagram of a computer system 600 suitable for implementing a terminal device according to an embodiment of the present disclosure. The terminal device shown in Fig. 6 is merely an example, which should not impose any limitations on functions and application ranges of this embodiment of the present disclosure.

As shown in Fig. 6, the computer system 600 includes a central processing unit (CPU) 601 which may perform various proper actions and processing according to programs stored in a read only memory (ROM) 602 or programs loaded from a storage part 608 to a random access memory (RAM) 603. Various programs and data required for the operation of the system 600 are further stored in the RAM 603. The CPU 601, the ROM 602, and the RAM 603 are connected with one another through a bus 604. An input/output (I/O) interface 605 is also connected to the bus 604.

Following components are connected to the I/O interface 605: an input part 606 including a keyboard, a mouse, etc.; an output part 607 including a cathode ray tube (CRT), a liquid crystal display (LCD),etc., and a speaker, etc.; the storage part 608 including a hard drive, etc.; and a communication part 609 including a network interface card such as a local area network (LAN) card and a modem. The communication part 609 performs communication processing via networks such as the Internet. A drive 610 is also connected to the I/O interface 605 as needed. Removable media 611, such as a magnetic disk, an optical disk, a magneto-optical disk, and a semiconductor memory can be installed on the drive 610 as needed, so that computer programs read therefrom are installed in the storage part 608 as needed.

Particularly, the foregoing process described with reference to the flowchart according to the embodiments disclosed in the present disclosure may be implemented as a computer software program. For example, an embodiment disclosed in the present disclosure includes a computer program product including a computer program carried on a computer-readable medium. The computer program includes program code for executing the method shown in the flowchart. In this embodiment, the computer program can be downloaded and installed from the network by the communication part 609, and/or be installed from the removable media 611. The computer program, when executed by the central processing unit (CPU) 601, executes the foregoing functions limited in the system of the present disclosure.

It should be noted that the computer-readable medium shown in the present disclosure may be a computer-readable signal medium, or a computer-readable storage medium, or any combination thereof. For example, the computer-readable storage medium may include but not limited to: electrical, magnetic, optical, electromagnetic, infrared, or semiconductor systems, apparatuses or devices, or any combination thereof. More specific examples of the computer-readable storage medium may include but not limited to: an electrical connection with one or more wires, a portable computer disk, a hard drive, a random access memory (RAM), a read only memory (ROM), an erasable programmable read only memory (EPROM or flash memory), fiber optics, a portable compact disc read only memory (CD-ROM), an optical storage device, a magnetic storage device, or any proper combination of the above. In the present disclosure, the computer-readable storage medium may be any tangible medium including or storing a program, and the program may be used by an instruction execution system, apparatus or device, or used in conjunction with the instruction execution system, apparatus or device. However, in the present disclosure, the computer-readable signal medium may include data signals propagated in a baseband or propagated as a part of a carrier wave, which carry computer-readable program code. The propagated data signals may have a plurality of forms, including but not limited to electromagnetic signals, optical signals, or any proper combination of the above. The computer-readable signal medium may be any computer-readable medium except the computer-readable storage medium. The computer-readable medium may send, propagate, or transmit programs used by the instruction execution system, apparatus, or device or used in conjunction with the instruction execution system, apparatus, or device. The program code included in the computer-readable medium may be transmitted by any proper medium, including but not limited to wireless, a wire, an optical cable, radio frequency (RF), etc., or any proper combination of the above.

The flowcharts and block diagrams in the accompanying drawings illustrate system architectures, functions, and operations possibly implemented by the system, method and computer program product according to the various embodiments of the present disclosure. In this regard, each block in the flowcharts or block diagrams may represent a module, a program segment, or part of the code, and the module, program segment, or part of the code includes one or more executable instructions for implementing specified logical functions. It should be noted that in some alternative implementations, functions marked in the blocks may also occur in an order different from that marked in the accompanying drawings. For example, two consecutively-shown blocks may actually be executed in parallel basically, but sometimes may also be executed in a reverse order, which depends on involved functions. It should be further noted that each block in the block diagrams or the flowcharts as well as a combination of the blocks in the block diagrams or the flowcharts may be implemented by using a dedicated hardware-based system that executes specified functions or operations, or using a combination of special hardware and computer instructions.

The modules described in the embodiments of the present disclosure may be implemented through software or hardware. The described modules may also be arranged in a processor. For example, it may be described as: a processor includes a query interaction module, a processing module, and an update module. The names of these modules do not limit the modules in some cases. For example, the update module may also be described as "a module for updating a digital currency wallet".

According to another aspect, the present disclosure further provides a computer-readable medium. The computer-readable medium may be included in the device described in the foregoing embodiment, and may also separately exist without being assembled in the device. The computer-readable medium carries one or more programs. When the one or more programs are executed by the device, the device is made to include: a query request about whether a digital currency wallet needs to be updated is sent to a trusted platform based on user trigger; a query result returned by the trusted platform based on the query request is received; in the case that the query result indicates that the digital currency wallet needs to be updated, a digital currency is withdrawn from the digital currency wallet, offline transaction data of the digital currency wallet is synchronized, and an update request is sent to the trusted platform; a target update instruction sent by the trusted platform based on the update request is received, and the target update instruction indicates account data corresponding to the digital currency wallet; and the digital currency wallet is updated based on the account data indicated by the target update instruction.

According to the technical solution of this embodiment of the present disclosure, the terminal with the digital currency wallet can query the trusted platform about whether the digital currency wallet needs to be updated. In the case that the update is needed, the digital currency wallet is updated based on the account data in the target update instruction sent by the trusted platform, such that the account data corresponding to the updated digital currency wallet remains unchanged, and query of the data such as the historical transaction record can still be achieved, thereby improving user experience. Further, in the case that the update is needed, the terminal with the digital currency wallet first withdraws the digital currency from the digital currency wallet and synchronizes the offline transaction data of the digital currency wallet, which firstly can avoid losses of the digital currency during the update process, and secondly can ensure that the account data in the target update instruction is complete data including the offline transaction data, thereby improving account security and usability.

The foregoing specific implementations do not limit the scope of protection of the present disclosure. Those skilled in the art should understand that various modifications, combinations, sub-combinations, and substitutions may occur based on design demands and other factors. Any modification, equivalent replacement, improvement, etc., made within the spirit and principle of the present disclosure shall fall within the scope of protection of the present disclosure.

## Claims

1. A method for updating a digital currency wallet, applied to a terminal with a digital currency wallet, comprising:
sending, based on user trigger, a query request about whether the digital currency wallet needs to be updated to a trusted platform;
receiving a query result returned by the trusted platform based on the query request;
in a case that the query result indicates that the digital currency wallet needs to be updated, withdrawing a digital currency from the digital currency wallet, synchronizing offline transaction data of the digital currency wallet, and sending an update request to the trusted platform;
receiving a target update instruction sent by the trusted platform based on the update request, wherein the target update instruction indicates account data corresponding to the digital currency wallet; and
updating the digital currency wallet based on the account data indicated by the target update instruction.

2. The method as claimed in claim 1, wherein after the sending an update request to the trusted platform and before the receiving a target update instruction sent by the trusted platform based on the update request, the method further comprises:
receiving an initialization instruction of updating sent by the trusted platform, wherein the initialization instruction of updating indicates a status of the digital currency wallet;
determining whether there is a digital currency balance in the digital currency wallet based on the initialization instruction of updating; and
if not, setting a current status of the digital currency wallet based on the status indicated by the initialization instruction of updating, and returning a first status code to the trusted platform, such that the trusted platform sends the target update instruction based on the first status code.

3. The method as claimed in claim 2, wherein the status indicated by the initialization instruction of updating is an updating status; and after the setting a current status of the digital currency wallet to the status indicated by the initialization instruction of updating, the method further comprises:
restricting offline transaction operations of the digital currency wallet.

4. The method as claimed in claim 2, wherein in a case that there is a digital currency balance in the digital currency wallet, the method further comprise:
returning a second status code to the trusted platform, such that the trusted platform terminates a response to the update request based on the second status code.

5. The method as claimed in claim 3, wherein after the updating the digital currency wallet based on the account data indicated by the target update instruction, the method further comprises:
setting the current status of the digital currency wallet to an available status.

6. The method as claimed in claim 1, wherein the target update instruction comprises a deletion instruction and an installation instruction; and the updating the digital currency wallet based on the account data indicated by the target update instruction comprises:
deleting the digital currency wallet based on the deletion instruction, and based on an installation package indicated by the installation instruction, downloading and installing a new digital currency wallet corresponding to the installation package; and
opening the new digital currency wallet based on the account data.

7. The method as claimed in claim 6, wherein after the downloading and installing a new digital currency wallet corresponding to the installation package, the method further comprises:
sending certificate application data to the trusted platform, such that the trusted platform obtains, based on the certificate application data, the account data from a management platform corresponding to the digital currency wallet, and generates the target update instruction based on the account data.

8. A terminal for updating a digital currency wallet, comprising a query interaction module, a processing module, and an update module, wherein
the query interaction module is configured to send, based on user trigger, a query request about whether the digital currency wallet needs to be updated to a trusted platform, and receive a query result returned by the trusted platform based on the query request;
the processing module is configured to withdraw a digital currency from the digital currency wallet in a case that the query result indicates that the digital currency wallet needs to be updated, synchronize offline transaction data of the digital currency wallet, and send an update request to the trusted platform; and
the update module is configured to receive a target update instruction sent by the trusted platform based on the update request, wherein the target update instruction indicates account data corresponding to the digital currency wallet; and update the digital currency wallet based on the account data indicated by the target update instruction.

9. A system for updating a digital currency wallet, comprising: a trusted platform, a management platform corresponding to the digital currency wallet, and the terminal for updating the digital currency wallet as claimed in claim 8, wherein
the trusted platform is configured to determine whether the digital currency wallet needs to be updated based on a query request sent by the terminal about whether the digital currency wallet needs to be updated, and configuration information corresponding to the digital currency wallet, and return a query result to the terminal; and obtain account data from the management platform corresponding to the digital currency wallet after receiving an update request sent by the terminal, and send a target update instruction to the terminal based on the account data.

10. An electronic device for updating a digital currency wallet, comprising:
one or more processors; and
a storage apparatus, configured to store one or more programs,
wherein when the one or more programs are executed by the one or more processors, the one or more processors implement the method as claimed in any one of claims 1 to 7.

11. A computer-readable medium, storing a computer program, wherein the program, when executed by a processor, implements the method as claimed in any one of claims 1 to 7.
